# EUROPEAN PATENT APPLICATION

(11) **EP 1 357 405 A1**
(43) Date of publication of application: **29.10.2003**
(21) Application number: 02711249.9
(22) Date of filing: 31.01.2002
(51) Int. Cl.: G02B 6/00

(54) **LIGHTGUIDE PLATE AND LIGHTING UNIT**

(30) Priority: 31.01.2001 JP 2001024225; 26.04.2001 JP 2001129426; 08.05.2001 JP 2001138015; 29.06.2001 JP 2001199739
(71) Applicant: Zeon Corporation, Tokyo 100-8323 (JP)
(72) Inventor: KUBOMURA, Kyoichi, c/o ZEON CORPORATION, Tokyo 100-8323 (JP); HATA, Kotaro,c/o OPTES Co., Ltd., Sano-shi, Tochigi 327-0001 (JP); TAKAHASHI, H., ZEON CORPORATION, Rsrch. & Dev.Cntr, Kawasaki-shi, Kanagawa 210-9507 (JP)
(74) Representative: Albrecht, Thomas, Dr.
(86) International application number: JP0200752
(87) International publication number: WO02061471

(57) **Abstract**

The invention relates to a light guide plate for a front-light type lighting unit in liquid crystal display systems, which comprises an alicylic structure-containing polymer resin, and has on at least one of major planar surfaces a fine projection-and-depression shape having a reflection function.

The object of the invention is to provide a light guide plate for a front-light type lighting unit, wherein the initial adhesion and post-durability testing (at high temperature, low temperature, high humidity, etc.) adhesion of an antireflection layer formed on the light guide plate are improved and the transferability of the fine projection-and-depression shape and light ray transmittance are improved as well, and a front-light type lighting unit using the same.

## Description

### TECHNICAL FIELD

The present invention relates to a light guide plate that is used for a front-light type lighting unit in a liquid crystal display system, and a front-light type lighting unit for liquid crystal display systems, in which that light guide plate is built.

### BACKGROUND ART

Comprising a transmission type liquid crystal display device, a backlight type lighting unit (hereinafter BL unit for short) for lighting that device, etc., liquid crystal display systems have so far been widespread in the form of display screens of personal computers, liquid crystal TVs, display units for car navigation systems, etc.

A light guide plate is used for a backlight type lighting unit. The back-light type unit is designed to direct light from the back surface of a liquid crystal display to a liquid crystal display sheet, and how uniformly light from a light source is directed to liquid crystals is the challenge to this unit. Light guide plates have so far been formed of transparent resins such as poly(methyl methacrylate) (PMMA), polycarbonate (PC) and polyester. JP-A 8-94852 discloses a report about a light guide plate used for the backlight type unit, wherein a member obtained by molding or forming norbornene resins is subjected on one side to an antireflection treatment.

In recently developed display screens for, for instance, the coming generation of portable communication terminals enabling communications of color moving images, a reflection type liquid crystal device and a front-light type lighting unit (hereinafter FL unit for short) have been mounted as a display system for the purpose of reducing power consumptions. For this FL unit, a front-lighting (FL) light guide plate is used. The front-lighting light guide plate must fulfill two functions, one of directing light from a light source on its side uniformly to the surface of liquid crystals, and another of allowing light reflected at the reflecting surface of a liquid crystal display device to be transmitted without being scattered. For uniform transmission of light, it is known to provide an antireflection layer. However, PMMA or PC may leave the antireflection layer less usable, because the antireflection layer cracks or breaks due to dimensional changes of the resin that are caused by changes in environmental factors such as temperature and humidity. When the antireflection layer is formed by vapor deposition or the like, the surface of the plate is heated to a high temperature at which a fine projection-and-depression shape may be deformed or failed.

### DISCLOSURE OF THE INVENTION

In view of such situations, the present invention has for its object the provision of a front-light type lighting unit for liquid crystal display systems, in which light ray transmittance, heat resistance, the transferability of a fine projection-and-depression shape, and the adhesion and durability of an anti-reflection layer are improved, and a lighting unit using that light guide plate.

As a result of intensive and extensive studies made so as to achieve this object, the inventor has now found that by use of an alicyclic structure-containing polymer resin represented by a norbornene polymer and a vinyl alicyclic hydrocarbon polymer, the adhesion, and durability in high-temperature and high-humidity, high-temperature, low-temperature environments of an antireflection layer formed on a major planar surface of a light guide plate are improved, and the satisfactory fluidity of the resin ensures that the transferability of a fine projection-and-depression shape is improved upon the formation of a light guide plate, so that it is possible to achieve a liquid crystal display system that can keep its high luminance and color temperature intact over an extended period of time. These findings underlie the present invention.

According to the present invention, the aforesaid object is achievable by the provision of a light guide plate for a front-light type lighting unit in liquid crystal display systems, which comprises an alicylic structure-containing polymer resin, and has on at least one of major planar surfaces a fine projection-and-depression shape having a reflection function.

The present invention also provides a light guide plate as recited in claim 1, which further comprises an antireflection layer on at least one of major planar surfaces.

Further, the present invention provides a front-light type lighting unit for liquid crystal display systems, in which the aforesaid light guide plate and a linear light source are built.

### BEST MODE FOR CARRYING OUT THE INVENTION

The light guide plate of the present invention is used for a front-light type lighting unit in liquid crystal display systems. Located on a liquid crystal display device and on a viewer side, the light guide plate has functions of taking in light from a light source from at least one side and directing the light toward the liquid crystal display device, so that the light reflected at the liquid crystal display device can be directed to the viewer side through the light guide plate. For this reason, a reflection type liquid crystal display device (reflection type LCD) is used as the liquid crystal display device.

The light guide plate of the present invention is obtained by molding or otherwise forming the alicyclic structure-containing polymer resin.

The alicyclic structure-containing polymer resin is a polymer having an alicyclic structure in its repeating unit. The alicyclic structure may be contained in the main chain and/or the side chain. The alicyclic structure, for instance, includes a cycloalkane structure and a cycloalkene structure, although the cycloalkane structure is preferred in view of transparency. Specifically but not exclusively, improved transparency is obtained with an alicyclic structure having usually 4 to 30, preferably 5 to 20, and more preferably 5 to 15 carbon atoms.

The proportion in the alicyclic structure-containing polymer of the repeating unit having an alicyclic structure is usually 50% by weight or greater, preferably 70% by weight or greater, and more preferably 90% by weight or greater, although it may be selected depending on the intended purpose. Too low a proportion in the alicyclic structure-containing polymer of the repeating unit having an alicyclic structure is not preferable because transparency becomes worse. No particular limitation is imposed on the balance of the alicyclic structure-containing polymer except the alicyclic structure-containing repeating unit; it may appropriately be selected on the intended purpose.

The polymer resin having such an alicyclic structure, for instance, includes (1) norbornene polymers, (2) monocyclic olefin polymers, (3) cyclic conjugated diene polymers and (4) vinyl alicyclic hydrocarbon polymers as well as hydrogenated products thereof, among which the hydrogenated norbornene polymers as well as the vinyl alicyclic hydrocarbon monomers and their hydrogenated products are preferred in view of transparency, although the hydrogenated norbornene polymers are more preferred.

### (1) Norbornene Polymers

The norbornene polymers used herein, for instance, are known from JP-A's 3-14882 and 3-122137, specifically including ring-opening polymers of norbornene monomers and their hydrogenated product, ring-opening copolymers of norbornene monomers and other monomers copolymerizable therewith through ring-opening and their hydrogenated products, addition polymers of norbornene monomers, and addition type copolymers of norbornene monomers and other monomers copolymerizable therewith, among which hydrogenated products of the ring-opening polymers of norbornene monomers are most preferred in view of transparency.

The norbornene monomers used herein, for instance, include bicycle[2.2.1]-hept-2-ene (known under the common name of norbornene), 5-methyl-bicyclo[2.2.1]-hept-2-ene, 5,5-dimethyl-bicyclo[2.2.1]-hept-2-ene, 5-ethyl-bicyclo[2.2.1]-hept-2-ene, 5-butyl-bicyclo[2.2.1]-hept-2-ene, 5-hexyl-bicyclo[2.2.1]-hept-2-ene, 5-ocyl-bicycio[2.2.1]-hept-2-ene, 5-octadecyl-bicyclo[2.2.1]-hept-2-ene, 5-ethylidene-bicyclo[2.2.1]-hept-2-ene, 5-methylidene-bicyclo[2.2.1]-hept-2-ene, 5-vinyl-bicyclo [2.2.1]-hept-2-ene, 5-propenyl-bicyclo[2.2.1]-hept-2-ene, 5-methoxy-carbonyl-bicyclo[2.2.1]-hept-2-ene, 5-cyano-bicyclo [2.2.1] -hept-2-ene, 5-methyl-5-methoxycarbonyl-bicyclo[2.2.1]-hept-2-ene, 5-methoxycarbonyl-bicyclo[2.2.1]-hept-2-ene, 5-ethoxycarbonyl-bicyclo[2.2.1]-hept-2-ene, 5-metyl-5-ethoxycarbonyl-bicyclo[2.2.1]-hept-2-ene, bicyclo[2.2.1]-hept-5-enyl-2-methylpropionate, bicyclo[2.2.1]-hept-5-enyl-2-methyloctanate, bicyclo[2.2.1]-hept-2-ene-5,6-dicarboxylic acid anhydride, 5-hydroxymethyl-bicyclo[2.2.1]-hept-2-ene, 5,6-di(hydroxymethyl)-bicyclo[2.2.1]-hept-2-ene, 5-hydroxy-i-propyl-bicyclo[2.2.1]-hept-2-ene, bicyclo[2.2.1]-hept-2-ene, 5,6-dicarboxy-bicyclo[2.2.1]-hept-2-ene, bicyclo[2.2.1]-hept-2-ene-5,6-dicarboxylic imide, 5-cyclopentyl-bicyclo-[2.2.1]-hept-2-ene, 5-cyclohexyl-bicyclo[2.2.1]-hept-2-ene, 5-cyclohexenyl-bicyclo[2.2.1]-hept-2-ene, 5-phenyl-bicyclo[2.2.1]-hept-2-ene, tricyclo[4.3.1^{2,5}.0 ^{1,6}]-deca-3,7-diene (known under the common name of dicyclopentadiene) , tricyclo[4.3.1^{2,5}.0^{1,6}]-deca-3-ene, tricyclo[4.4.1^{2,5} .0^{1,6}]-undeca-3,7-diene, tricyclo[4.4.1^{2,5} .0^{1,6}]-undeca-3,8-diene, tricyclo[4.4.1^{2,5}.0^{1,6}]-undeca-3-ene, tetracyclo[7.4.1^{10,13}.0^{1,9}.0^{2,7}] -trideca-2,4,6,11-tetraene (also referred to as 1,4-methano-1,4,4a,9a-tetrahydroflorene) , tetracyclo[8.4.1^{11,14} .0^{1,10}.0^{3,8}]-tetradeca-3,5,7,12,11-tetraene (also referred to as 1,4-methano-1,4,4a,5.10.10a-hexahydroanthracene), tetracyclo[4.4.1^{2,5}.1^{7,10}.0]-dodeca-3-ene (also referred to as tetracyclododecene), 8-methyl-tetracyclo [4.4.1^{2,5}.1^{7,10}.0]-dodeca-3-ene; 8-methyl-tetracyclo[4.4.1^{2,5} .1^{7,10}.0]-dodeca-3-ene, 8-ethyl-tetracycio [ 4 . 4 .1^{2,5}.1^{7,10}.0] -dodeca-3-ene, 8-methylidene-tetracyclo[4.4.1^{2,5}.1^{7,10}.0]-dodeca-3-ene, 8-ethylidene-tetracyclo[4.4.1^{2,5}.1^{7,10}.0]-dodeca-3-ene, 8-vinyl-tetracyclo[4.4.1^{2,5}.1^{7,10}.0]-dodeca-3-ene, 8-propenyl-tetracyclo [4. 4.1^{2,5}.1^{7,10}.0]-dodeca-3-ene, 8-methoxycarbonyl-tetracyclo[4.4.1^{2,5}.1^{7,10}.0]-dodeca-3-ene, 8-methyl-8-methoxycarbonyl-tetracyclo[4.4.1^{2,5}.1^{7,10}.0]-dodeca-3-ene, 8-hydroxymethyl-tetracyclo [4.4.1^{2,5}.1^{7,10}.0]-dodeca-3-ene, 8-carboxy-tetracyclo[4.4.1^{2,5}.1^{7,10}.0]-dodeca-3-ene, 8-cyclopentyl-tetracyclo[4.4.1^{2,5}.1^{7,10}.0]-dodeca-3-ene, 8-cyclohexyl-tetracyclo[4.4.1^{2,5}.1^{7,10}.0]-dodeca-3-ene, 8-cyclohexenyl-tetracyclo[4.4.1^{2,5}.1^{7,10}.0]-dodeca-3-ene, 8-phenyl-tetracyclo [4.4.1^{2,5}.1^{7,10}.0]-dodeca-3-ene, pentacyclo [6.5.1^{1,8}.1^{3,6}.0^{2,7}.0^{9,13}]-pentadeca-3, 10-diene, and pentacyclo [7.4.1^{3,6}.1^{10,13}.0^{1,9}.0^{2,7}] -pentadeca-4 ,11-diene. These norbornene monomers may be used alone or in combination of two or more.

The ring-opening polymers of norbornene monomers or the ring-opening copolymers of norborene monomers and other monomers capable of being ring-opening copolymerized therewith may be obtained by the polymerization of norbornene monomers in the presence of ring-opening polymerization catalysts. The ring-opening polymerization catalysts, for instance, include catalyst systems comprising halides, nitrates or acetylacetone compounds of metals such as ruthenium, rhodium, palladium, osmium, iridium and platinum and reducing agents, or catalyst systems comprising halides or acetylacetone compounds of metals such as titanium, vanadium, zirconium, tungsten and molybdenum and organoaluminum compounds. The polymerization reaction may be carried out in the presence or absence of a solvent and usually at a polymerization temperature of -50°C to 100°C and a polymerization pressure of 0 to 50 kg/cm².

Other monomers capable of being copolymerized with the norbornene monomer through ring-opening, for instance, include monocyclic olefine monomers such as cyclohexene, cycloheptene and cyclooctene as set forth in JP-A 64-66216.

The hydrogenated products of the ring-opening polymers of norbornene monomers may be obtained by adding a hydrogenation catalyst to a polymerization solution of the ring-opening polymer of a norbornene monomer for hydrogenation. Specifically but not exclusively, heterogeneous or homogeneous catalyst systems may be used as the hydrogenation catalyst.

The addition (co)polymers of norbornene monomers and other monomers copolymerizable therewith, for instance, may be obtained by the (co)polymerization in the presence or absence of a solvent of the monomer components in the presence of a catalyst system comprising a titanium, zirconium or vanadium compound and an organoaluminum compound and usually at a polymerization temperature of-50°C to 100°C and a polymerization pressure of 0 to 50 kg/cm².

The copolymerizable monomers, for instance, include α-olefins having 2 to 20 carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicosene; cycloolefins such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene; and nonconjugated dienes such as 1,4-hexadiene, 4-methyl-1,4-hexadiene, 5-methyl-1,4-hexadiene and 1,7-octadiene, among which α-olefins are preferred although ethylene is most preferred.

The other monomers copolymerizable with the norbornene monomer may be used alone or in combination of two or more. For the addition copolymerization of the norbornene monomer and other monomer copolymerizable therewith, the proportion in the addition copolymer of the bond unit derived from the norbornene monomer and the bond unit derived from the other monomer copolymerizable therewith is selected from the range of, by weight, usually 30:70 to 99:1, preferably 50:50 to 97:3, and more preferably 70:30 to 95:5.

### (2) Monocyclic Olefin Polymers

For the monocyclic olefin polymers, for instance, addition polymers of monocyclic olefin monomers such as cyclohexene, cycloheptene and cyclooctene as set forth in JP-A 64-66216 may be used.

### (3) Cyclic Conjugated Diene Polymers

For the cyclic conjugated diene polymers, for example, 1,2- or 1,4-addition polymers of such cyclic conjugated diene monomers as set forth in JP-A's 6-136057 and 7-258318, e.g., cyclopentadiene and cyclohexadiene as well as their hydrogenated products may be used.

While the molecular weight of the norbornene polymer, monocyclic olefin polymer or cyclic conjugnated diene polymer used herein may be appropriately selected depending on the intended purposes, their weight-average molecular weight should be in the range of usually 5,000 to 500,000, preferably 8,000 to 200,000, and more preferably 10,000 to 100,000 as measured and calculated on a polyisoprene or polystyrene basis by means of gel permeation chromatography (GPC) using a cyclohexane solution (or a toluene solution when the polymer is not dissolved in cyclohexane), because the mechanical strength of the resultant molding is balanced against moldability (formability) on high levels.

### (4) Vinyl Alicyclic Hydrocarbon Polymers

For the vinyl alicyclic hydrocabon polymers, for instance, use may be made of polymers of such vinyl alicyclic hydrocarbon monomers as set forth in JP-A 51-59989, e.g., vinylcyclohexene and vinylcyclohexane as well as their hydrogenated products, and polymers of such vinyl aromatic monomers as set forth in JP-A's 63-43910 and 64-1706, e.g., styrene and α-methylstyrene, in which the aromatic ring moieties are hydrogenated. Use may also be made of random, block and other copolymers of the vinyl alicyclic hydrocarbon monomers or vinyl aromatic monomers and other monomers copolymerizable therewith as well as their hydrogenated products. Specifically but not exclusively, diblock, triblock or multiblock copolymers or gradient block copolymers may be used as the block copolymers.

While the molecular weight of the vinyl alicyclic hydrocarbon polymer used herein may appropriately be determined depending on the intended purpose, its weight-average molecular weight should be in the range of usually 10,000 to 300,000, preferably 15,000 to 250,000, and more preferably 20,000 to 200,000 as measured and calculated on a polyisoprene or polystyrene basis by means of gel permeation chromatography (GPC) using a cyclohexane solution (or a toluene solution when the polymer is not dissolved in cyclohexane), because the mechanical strength of the resultant molding is balanced against moldability (formability) on high levels.

While the glass transition temperature (Tg) of the alicyclic structure-containing polymer resin used herein may appropriately be determined depending on the intended purpose, it should be in the range of usually at least 80°C, preferably 100°C to 250°C, and more preferably 120°C to 200°C. In this range for Tg, heat resistance is reconciled with moldability (formability) on high levels.

In the present invention, stabilizers such as antioxidants, ultraviolet absorbents, weather stabilizers, light stabilizers and heat stabilizers; fillers such as organic fillers and inorganic fillers; coloring agents such as dyes and pigments; and other additives such as near-infrared absorbents, plasticizers, lubricants, antistatic agents, flame-retardants, other resins and soft polymers may be added to the aforesaid alicyclic structure-containing polymer resin, if required. These additives may be used alone or in combination of two or more, and in such an amount as to be not detrimental to the objects of the present invention.

The light guide plate of the present invention is obtained by molding or otherwise forming the aforesaid alicyclic structure-containing polymer resin.

The light guide plate may be formed either by hotmelt molding processes such as injection molding, extrusion molding and press molding or by solution molding processes such cast molding. However, since the alicyclic structure-containing polymer resin used herein is improved in terms of fluidity upon melting by heating, it is particularly preferable to make use of injection molding and press molding, because transferability for the aforesaid fine projection-and-depression shape is improved.

When the light guide plate obtained as described above is held at 90°C for 1 hour, it is desired that the amount of gases generated therefrom be preferably up to 200 µg/m², more preferably up to 150 µg/m², and most preferably up to 100 µg/m² per unit surface area. With the amount of the generated gases coming within that range, an antireflection layer formed on the light guide plate, as will be described later, is less susceptible to thickness variations, and so ensures a uniform thickness. This effect is particularly noticeable when the antireflection layer is a sputtering film.

The amount of gases generated out of the light guide plate may be measured by dynamic headspace gas chromatography mass spectrometry (DHS-GC-MS). In this case, gases generated out of the light guide plate are collected by a solid adsorbent, and then concentrated for pouring into a port of a DHS-GC-MS device.

Such a light guide plate as explained above may be obtained by combinations of the following methods:
(1) the first method (also called the direct drying method) wherein a post-synthesis reaction solution for the alicyclic structure-containing polymer resin is heated to a specific temperature or higher under reduced pressure (at a pressure lower than normal pressure), thereby evaporating off volatile components contained in the solvent and the alicylic structure-containing polymer resin;
(2) the second method wherein an additive having a specific molecular weight or greater is used in an specific amount or less as the additive used depending on the intended purpose; and
(3) the third method wherein a molding material comprising the alicyclic structure-containing polymer resin (e.g., a pellet form of molding material) is heated and/or depressurized before molded or otherwise formed into a light guide plate.

(1) In the direct drying method, the reaction solution is heated at a temperature in the range of 270 to 340°C, and preferably 275 to 330°C. At too low a heating temperature, there is a drop of the efficiency of removal of low-molecular-weight components and solvent residues from the alicyclic structure-containing polymer resin, and too high a heating temperature often leads to the possibility that the resin may be decomposed by heat. The reduced pressure should be up to 26.7 kPa, preferably up to 13.4 kPa, and more preferably up to 6.7 kPa.
(2) To obtain the light guide plate of the present invention, it is desired to reduce the content of components having a molecular weight of up to 1,000, contained in the alicyclic structure-containing polymer resin, down to preferably up to 2% by weight, more preferably up to 1% by weight, and even more preferably up to 0.5% by weight.

The "components having a molecular weight of up to 1,000" used herein are understood to refer to components that remain in the alicyclic structure-containing polymer resin during its synthesis process and have a molecular weight of up to 10,000, for instance, (1) a monomer component that remains during the polymerization for the resin, (2) an oligomer component (e.g., one having a polymerization degree of 10 or less), (3) a low-molecular-weight polymer component, and (4) moisture and an organic solvent. Of these components, the molecular weight of the polymer and oligomer is usually given in terms of weight-average molecular weight (Mw) as measured on a polyisoprene basis by gel permeation chromatography using cyclohexane as a solvent.

With the aforesaid methods, it is possible to obtain not only light guide plates but also molded or otherwise formed parts in which, upon held at 90°C for 1 hour, the amount of gases generated therefrom is 200 µg/m² or less per unit surface area. Such a molded part ensures that an antireflection or other layer formed thereon by vapor deposition or sputtering is less susceptible to thickness variations and so provides a generally uniform thickness.

For the light guide plate of the present invention, it is required that at least one surface, preferably one planar surface except side faces has a fine projection-and-depression shape having a reflection function, and that at least one surface, preferably one planar surface except side faces has an antireflection layer formed thereon.

The light guide plate of the present invention may be configured into a sheet form, the size of which may be selected depending on the screen size of the liquid crystal display device with which the light guide plate is used. Usually, selection may be made from the width range of 10 to 300 mm, preferably 20 to 200 mm and more preferably 30 to 150 mm, the length range of 10 to 350 mm, preferably 30 to 250 mm and more preferably 40 to 200 mm, and the thickness range of 0.2 to 10 mm, preferably 0.5 to 5 mm and more preferably 0.8 to 3 mm.

The light guide plate should have on at least one major planar surface a fine projection-and-depression shape having a reflection function of directing light emerging from a light source and taken in through one side face toward a reflection type LCD (hereinafter LCD for short). The "at least one major planar surface" should be defined by preferably a planar surface except side faces, and more preferably a surface that faces away from the LCD.

Nothing but to have a reflection function is imposed on the fine projection-and-depression shape. However, it is preferable that the "one major planar surface" has a plurality of facets for directing light taken in through the aforesaid one side face (entrance surface) toward the LCD. For instance, it is preferable to use a fine projection-and-depression shape comprising a plurality of parallel V-grooves or continuously arrayed prisms. In this case, the V-groove or prism pitch should be 10 to 500 µm, preferably 20 to 300 µm and more preferably 50 to 200 µm with a width of 1 to 250 µm, preferably 2 to 100 µm and more preferably 5 to 50 µm and a depth of 1 to 250 µm, preferably 2 to 100 µm and more preferably 5 to 50 µm. Too narrow a pitch makes the light reflected at the LCD less susceptible to transmit through the light guide plate, and too wide a pitch is detrimental to the reflection of light from the light source. Too small a width and too small a depth are detrimental to the reflection of light from the light source, and too large a width and too large a depth make the light reflected at the LCD less susceptible to transmission.

Further, the light guide plate of the present invention should preferably have on at least one surface an antireflection layer. This antireflection layer ensures that the light reflected at the fine projection-and-depression shape is directed toward the LCD without a loss, and the light reflected at the LCD transmits through the light guide plate without a loss.

Thus, the "one surface" should preferably be defined by a planar surface except side faces, which faces away from the planar surface that opposes to the LCD, i.e., the surface having the fine projection-and-depression shape.

Generally, no particular limitation is placed on the antireflection layer provided that, as is the case with an antireflection layer on an optical part, it has a function of preventing reflection of light such as visible light rays at the entrance surface. For the antireflection layer, it is possible to use thin films of inorganic compounds or films formed of transparent resins that are used as antireflection layers for solar batteries and optical parts inclusive of optical sensors, lenses and mirrors. In particular, the antireflection layers formed of the aforesaid inorganic compounds have the property of its reflectivity becoming low in the visible range of 400 to 700 nm. The antireflection layer may be used in a monolayer form or in a multilayer form comprising about 2 to 6 layers depending on the intended purpose.

For inorganic thin films, it is acceptable to use those formed of metal oxides, inorganic oxides, metal sulfides, metal fluorides or the like. It is then preferable to use a material that shows improved adhesion to the surface of the light guide plate, and is stable in air and water as well.

Exemplary metal oxides are aluminum oxide, bismuth oxide, cerium oxide, chromium oxide, europium oxide, iron oxide, ruthenium oxide, indium oxide, lanthanum oxide, molybdenum oxide, magnesium oxide, neodymium oxide, lead oxide, praseodymium oxide, samarium oxide, antimony oxide, scandium oxide, tin oxide, titanium oxide, titanium monoxide, dititanium trioxide, tantalum oxide, tungsten oxide, yttrium oxide, zirconium oxide, and zinc oxide. These oxides may be in a mixture form (e.g., a mixture of indium oxide and tin oxide: ITO).

Other oxides (inorganic oxides), for instance, include silicon oxide and silicon monoxide.

Exemplary metal sulfides are zinc sulfide.

Exemplary metal fluorides are aluminum fluoride, barium fluoride, cerium fluoride, calcium fluoride, lanthanum fluoride, lithium fluoride, magnesium fluoride, cryolite, thiolite, neodymium fluoride, sodium fluoride, lead fluoride, samarium fluoride, and strontium fluoride.

In view of antireflection improvements, it is usually preferable to alternately laminate at least two different inorganic compound thin films having varying refractive indices.

The inorganic thin film may be formed on the entrance surface by means of (1) such processes as vacuum vapor deposition, ion plating, and sputtering, (2) a method wherein a solution of the aforesaid inorganic compound(s) dispersed therein is coated on the entrance surface, followed by removal of a solvent, and (3) a method where a film (in a mono- or multi-layer film form) formed of the aforesaid inorganic compound(s) is bonded to the entrance surface.

More specifically, (1) (i) a low-refractive-index layer comprising silicon oxide (SiO₂) and (ii) a high-refractive-index layer comprising a metal oxide, a metal sulfide or a metal fluoride are alternately formed by vacuum vapor deposition, ion plating, sputtering or the like in the order of a first layer (high-refractive-index layer), a second layer (low-refractive-index layer), a third layer (high-refractive-index layer) and a fourth layer (low-refractive-index layer) as viewed from the surface of the light guide plate (see Fig. 1), and (2) a film with silicon oxide or a metal oxide or fluoride laminated thereon is applied onto the entrance surface through an adhesive agent.

It is here noted that only one requirement for the "low-refractive-index-layer" and "high-refractive-index layer" in the sense that a multilayer structure formed of them functions merely as an antireflection layer is that they have varying refractive indices. To enhance the antireflection function, however, the inorganic compound having a refractive index of less than 1.6, especially less than 1.5 should preferably be selected from the aforesaid inorganic compounds for the "low-refractive-index layer". Such inorganic compounds, for instance, include silicon dioxide and magnesium fluoride. For the "high-refractive-index layer", it is then preferable to select the inorganic compound having a refractive index of 1.6 to 2.5, especially 1.8 to 2.2 from the aforesaid inorganic compounds.

In the case of (1) above, each layer has a thickness in the range of 5 to 500 nm, and preferably 10 to 300 nm. By varying the thickness of each layer in this range, it is possible to gain control of reflectivity and transmittance. In the case of (2) above, each layer has a thickness in the range of 5 to 300 µm, and preferably 10 to 100 µm.

Since the alicyclic structure-containing polymer resin used in the present invention is of improved heat resistance, it is particularly preferable to use the aforesaid method (1), because the adhesion of the antireflection layer to the application surface is improved with no deformation of the fine projection-and-depression shape by heat during film formation.

When the aforesaid method (1) is used in the present invention, it is preferable to form on the surface of the light guide plate a layer comprising tantalum oxide, zirconium oxide, cerium oxide, niobium oxide or their mixture as the high-refractive-index metal oxide, because (1) the initial adhesion of the anti-reflection layer to the application surface and (2) the durability of the antireflection layer in environments of high temperature, low temperature, high humidity, etc. are improved. Among others, tantalum oxide is most preferred.

As an underlying layer for the aforesaid metal oxide layer, it is preferable that a layer of silicon monoxide having a varying degree of oxidation (SiOx where x is variable between 1 and 2) or a layer of silicon dioxide is interposed between the first layer and the surface of the light guide plate (see Fig. 1).

Since the antireflection effect (reflectivity) of the antireflection layer is substantially determined by the multilayer structure wherein the high-refractive-index layer is closest to the light guide plate, the aforesaid underlying layer may behave as a low-refractive-index layer irrespective of whether it is formed of the silicon monoxide layer having a variable degree of oxidation or the silicon dioxide layer. It is noted, however, that this underlying layer functions as a substantial layer for improving the durability and adhesion of the multilayer structure.

When the underlying layer is provided, it is preferable to form an underlying layer (A) mainly composed of SiOx (1≤x≤2) on at least one major planar surface of the light guide plate, and then form a layer (B) composed mainly of tantalum pentoxide thereon, because the initial adhesion and durability of the antireflection layer is much more improved.

The layer (A) contains SiOx (1≤x≤2) as the main component. For instance, the layer (A) may contain SiO₂, SiO or SiOx (1<x<2) as the main component. In particular, the layer (A) containing SiOx (1<x<2) as the main component is superior to a layer containing SiO₂ as the main component in terms of adhesion and to a layer containing SiO as the main component in terms of the reflection properties of the antireflection film.

That layer may be formed by vacuum vapor deposition, ion plating, sputtering , ion beam assisted technique or the like; however, vacuum vapor deposition is generally acceptable.

For vacuum vapor deposition, resistance heating or an electron gun is used as the heating source, and a granular or tablet form of SiO₂ is used for the deposition material. During vapor deposition, it is acceptable to admit oxygen gas into a chamber.

When SiO, and SiOx is provided in a film form, resistance heating or an electron gun is used as the heating source, and SiO is used for the deposition material. During vapor deposition, reactive deposition is carried out under control of the degree of oxidation (x) of Si while oxygen is introduced into a chamber until about 8x10⁻⁵ to 5x10⁻³ Torr is reached.

For sputtering, general magnetron sputtering systems may be used while a DC or RF power source is used as the power source. SiO₂ or Si (silicon) may be used for the target. When Si is used, O₂ (oxygen) gas with Ar (argon) is admitted into a chamber. Depending on the amount of oxygen gas admitted, it is possible to gain control of the degree of oxidation of Si and control the range of x in SiOx to 1 to 2.

The layer (A) has a thickness of usually 10 to 500 nm, preferably 30 to 300 nm, and more preferably 50 to 200 nm. Too thin a layer (A) causes a drop of the adhesion of the multilayer film whereas too thick a layer (A) results in a drop of the optical properties of the multilayer film.

The layer (B) contains tantalum pentoxide as the main component. The layer (B) should contain Ta₂O₅ in an amount of at least 50% by weight, preferably at least 70% by weight, and most preferably at least 90% by weight. As the content of Ta₂O₅ becomes low, the adhesion and durability of the multilayer film drop. For some optical parts, the layer containing Ta₂O₅ as the main component must be transparent. For this reason, the contents of components other than Ta₂O₅ should preferably be reduced as much as possible. Preferable as the components other than Ta₂O₅, for instance, are ZrO₂, CeO₂, Y₂O₃, TiO₂, Ti₃O₅, SiO and Nb₂O₅.

The layer may be formed by vacuum vapor deposition, ion plating, sputtering, ion beam assisted technique or the like; however, vacuum vapor deposition is generally acceptable.

With the vacuum vapor deposition technique, an electron gun, resistance heating or the like is used to heat an evaporation source containing Ta₂O₅ to deposit Ta₂O₅ onto the surface of a substrate. Deposition conditions are not critical to this end; conditions used for general vacuum vapor deposition techniques are acceptable. However, it is noted that when an electron gun, resistance heating or the like is used to heat an evaporation source consisting only of Ta₂O₅, some Ta₂O₅ suffers a deficiency of oxygen atoms upon evaporation and so a layer formed by vapor deposition is colored, resulting in absorption of light. However, coloration may be reduced by carrying out vapor deposition while the vapor deposition pressure is controlled to about 2x10⁻⁵ to 5x10⁻³ Torr by introduction of oxygen in a chamber during vapor deposition.

The use as the evaporation source of a Ta₂O₅/ZrO₂ mixture having a ZrO₂ content of 3 to 50% by weight, more preferably 10 to 40% by weight, and most preferably 20 to 35% by weight yields a transparent film in a stable manner without any coloration of the deposited film. It is here noted that since ZrO₂ is lesser susceptible to evaporation than Ta₂O₅, ZrO₂ is contained in the deposited film in a content much smaller than the content of ZrO₂ in the evaporation source. Even with the Ta₂O₅/ZrO₂ mixture, it is thus possible to easily obtain a deposited film having a Ta₂O₅ content of usually at least 90% by weight, and preferably at least 95% by weight.

The layer (B) has a thickness of usually 5 to 500 nm, preferably 10 to 300 nm, and more preferably 15 to 200 nm. Too thin a layer (B) causes a drop of the adhesion of the multilayer film whereas too thick a layer (B) makes control of optical properties difficult.

Of the aforesaid methods, the most preferred vapor deposition method using tantalum oxide for the metal oxide is characterized in that a deposition composition containing tantalum oxide as the main component is held for at least 10 minutes in a molten state, followed by solidification, and the thus solidified composition is then used to form on an application member the layer (A) containing tantalum oxide as the main component by means of the vacuum vapor deposition technique.

In this case, the melting temperature is usually at least 1,470°C, preferably at least 1,500°C, and the upper limit thereto is 2,000°C. The holding time is usually at least 10 minutes, preferably at least 15 minutes, and the upper limit thereto varies with temperature. Too low a melting temperature or too short a holding time renders removal of volatile components, etc. in the composition insufficient, and too high a melting temperature or too long a holding time causes decomposition of components in the composition. In any case, there is deterioration in the adhesion, durability, and optical properties of the deposited film. In other words, so long as the melting temperature and holding time are kept in the aforesaid ranges, the initial adhesion strength, post-durability testing adhesion strength, and optical properties of the deposited film are improved.

To keep the composition from decomposition, it is preferable that the holding of the composition in the molten state is carried out in a low-oxygen-concentration atmosphere having an oxygen concentration of preferably up to 10%, more preferably up to 8%, and more preferably up to 5%. For accelerated removal of volatile components, etc., that holding should desirously be carried out at a pressure lower than normal pressure, preferably at up to 400 hPa, more preferably up to 200 hPa, and more preferably up to 100 hPa.

Melting by heating should preferably be carried out with a melting device that has an electric heater and can be depressurized. For instance, an electric melting furnace or an electric heating crucible may be used. It is acceptable to use a general device that can be depressurized, such as an autoclave, wherein the deposition composition is molten by heating using an electron beam.

After held in the molten state under the aforesaid conditions, the aforesaid composition should preferably have had a tantalum oxide content of 90% by weight or greater upon solidification. Preferable for the tantalum oxide is tantalum pentoxide (Ta₂O₅). With the tantalum oxide content coming within the aforesaid range, the adhesion and durability of the deposited film are improved. Some types of films must be transparent. For this reason, the components other than tantalum oxide should preferably be ZrO₂, CeO₂, Y₂O₃, TiO₂, Ti₃O₅, SiO, Nb₂O₅, etc., although ZrO₂ is most preferred.

For use, the solidified composition should preferably be pulverized. The resultant particles should preferably have an average particle diameter in the range of 0.5 to 1.7 mm. When the particles having an average particle diameter in this range is used with a continuous type of vapor deposition reactor as will be described later, there is no fluctuation of the feed speed of an automatic feeder for feeding the deposition material comprising the composition to a heating crucible, ensuring that the deposited film can be obtained with stable thickness and optical properties. For pulverization, a roller mill, a high-speed rotary mill, a ball mill or the like should preferably be used.

The method for forming the layer (A) containing SiOx (1≤x≤2) as the main component on the surface of the light guide plate obtained by molding the alicyclic structure-containing polymer resin and then forming thereon the layer (B) containing tantalum pentoxide as the main component according to the aforesaid process is effective not only for light guide plates but also for every part obtained by molding of the alicyclic structure-containing polymer resin. That is, a multilayer structure (multilayer structure 1) obtained by forming the layer (A) containing SiOx (1≤x≤2) as the main component on the surface of the light guide plate obtained by molding the alicyclic structure-containing polymer resin and then forming thereon the layer (B) containing tantalum pentoxide as the main component according to the aforesaid process is improved in terms of the initial adhesion, durability, and optical properties such as reflectivity and transmittance of each layer. By forming on the layer (B) various layers comprising one or more inorganic compound layers and/or organic compound layers, the initial adhesion, durability, and optical properties such as reflectivity and transmittance of the multilayer structure are much more improved. Thus, the multilayer structure can function as antireflection films, wavelength selectable transmitting films, polarizing films, reflecting films, electrically conductive films, etc., and so can be used not only as the front-lighting light guide plates of the present invention but also as optical parts such as lenses, prisms, optical discs, optical filters, beam splitters, mirrors, backlighting light guides plates, liquid crystal substrates, polarizing films, phase-difference films, antireflection films (AR films), transparent conductive films and transparent conductive sheets.

The aforesaid multilayer structures may also be applied, to say nothing of optical parts, to wrap films or other films such as stretched films, shrink film and gas barrier films; package sheets such as press-through package sheets and blister package sheets; and films for flexible board substrates or other electric and electronic parts such as conductive films and insulating films.

A multilayer structure characterized in that a part obtained by molding or otherwise forming the alicyclic structure-containing polymer resin and allowed to have a metal reflecting film is provided on the metal reflecting film with the layer (A) containing SiOx (1≤x≤2) as the main component and provided thereon with the layer (B) containing tantalum pentoxide as the main component, too, is usable in a part of the aforesaid applications.

The light guide plate that comprises the alicyclic structure-containing polymer resin and in which the amount of gases generated per unit area surface upon holding at 90°C for 1 hour is limited to 200 µg/m² or less, if the anti-reflection layer is formed on its surface by sputtering, is improved in terms of the initial adhesion, durability, and optical performance such as reflectivity and transmittance of each layer. Further, if various layers comprising at least one inorganic compound layer and/or organic compound layer are formed on the layer (B), the multilayer structure including the layers (A) and (B), too, is improved in terms of the initial adhesion, durability, and optical performance such as reflectivity and transmittance of the respective layers. This technique, too, is effective for every part obtained by molding or otherwise forming the alicyclic structure-containing polymer resin, to say nothing of the light guide plate. That is, an optical multilayer structure (multilayer structure 2) obtained by forming a sputtering film on the surface of a part that comprises the alicyclic structure-containing polymer resin and in which the amount of gases generated per unit area surface upon holding at 90°C for 1 hour is limited to 200 µg/m² or less is improved in terms of the initial adhesion, durability, and optical performance such as reflectivity and transmittance of each layer. Further, if various layers comprising at least one inorganic compound layer and/or organic compound layer are formed on the layer (B), the multilayer structure including the layers (A) and (B), too, is improved in terms of the initial adhesion, durability, and optical performance such as reflectivity and transmittance of the respective layers.

The sputtering film, too, is suitable for use as antireflection films, wavelength selectable transmitting films, polarizing films, reflecting films, electrically conductive films, etc. Hence, the optical multilayer structure may also be suitably used in such similar applications as in the aforesaid multilayer structure 1, to say nothing of the front-lighting light guide plate of the present invention.

The sputtering film should have an average thickness of preferably 50 to 1,000 nm and more preferably 75 to 750 nm, with a thickness fluctuation being preferably ±5% or less and more preferably ±4% or less relative to the average thickness. Such a sputtering film is also suitable for use as an antireflection film for the light guide plate of the present invention.

The type of the inorganic compound that is used as the component of the sputtering film is the same as the antireflection layer for the light guide plate of the present invention.

The sputtering technique used herein may be selected from commonly available sputtering processes. For instance, an appropriate selection may be made from plasma sputtering processes such as two-target sputtering, three-target sputtering, four-target sputtering and magnetron sputtering, and beam sputtering processes such as ion beam sputtering and ECR sputtering, wherein DC power sources, RF power sources or microwaves may be used as the power sources.

Appropriately, the target material used may be selected depending on the type of the sputtering film, what purpose it is used for, etc. Generally, when an oxide film is formed, a metal oxide or silicon oxide (e.g., SiO₂) is used as the target in an RF sputtering system with an RF power source.

Preferably in the present invention, reactive sputtering should be used to obtain a sputtering film that has reduced thickness variations and improved homogeneity and surface precision.

The reactive sputtering has the feature of forming a film while the film is modified by reactions during sputtering. Generally, the modifying reactions involve oxidation reaction and nitriding reaction. To be more specific, the reactive sputtering is characterized in that a metal such as tantalum (Ta) or titanium (Ti) or silicon (Si) is used as the target and a film is formed while the material is converted into an oxide or nitride with the introduction of oxygen gas or nitrogen gas into a chamber. Oxygen or nitrogen may be introduced into the chamber in the form of an inert gas containing a constant amount of oxygen or nitrogen.

In the present invention, the sputtering should be carried out in a magnetron sputtering mode using a DC power source.

It is acceptable to form a monolayer film by the sputtering process. To obtain a film having more improved optical performance, however, it is preferable to form a multilayer film wherein two or more layers varying in component and composition are laminated together. More preferably, layers with varying refractive indices should be laminated together in an alternate fashion. The multilayer film may have about 10 to 20 layers.

The thus obtained sputtering film has an average thickness of 50 to 1,000 nm and preferably 75 to 750 nm in total, and is suitable for use as the anti-reflection film for the light guide plate of the present invention.

The front-light type lighting unit of the present invention comprises a light source and a light guide plate, wherein the light source in a linear form should preferably be located in the vicinity of at least one side face of the light guide plate. The distance between the light source and the entrance surface of the light guide plate is usually 0.01 to 5 mm, preferably 0.05 to 2 mm, and more preferably 0.1 to 1 mm. When the light source is located farther off the entrance surface, light is entered into the light guide plate with some losses, resulting in a drop of the emission luminance of the lighting unit. Conversely, as the light source is located too closely to the entrance surface of the light guide plate, it is likely that the entrance surface may be deformed or colored by heat from the light source. Instead of the linear light source, it is acceptable to use an L- or C-shaped light source having two or three entrance surfaces. To enter the light from the light source into the light guide plate with the highest possible efficiency, it is preferable to mount a reflecting layer (reflector) around the light source.

Nothing but to emit visible light rays is imposed on the light source used for the lighting system of the present invention; for instance, incandescent electric light bulbs, fluorescent discharge tubes, light-emitting diodes (LEDs), and electro-luminescent devices (EL devices) may be used. In view of luminance, color temperature, low heat generation, low ultraviolet irradiation, etc., it is preferable to use fluorescent discharge tubes, and LEDs. Of the fluorescent discharge tubes, cold-cathode fluorescent discharge tubes are preferred.

For instance, a fluorescent discharge tube gives out ultraviolet radiation, which is then absorbed by a fluorescent substance and excited to emit visible light; however, some ultraviolet radiation is emitted out. This ultraviolet radiation has a strong absorption at specific wavelengths (254 nm and 313 nm).

In the present invention, it is preferable to use a fluorescent discharge tube having reduced ultraviolet radiations as the light source. In other words, the light source used herein has a maximum light-emission intensity at a wavelength of 350 nm or less of up to 2 µw/ (cm² • nm) preferably up to 1 µW/(cm² • nm) , and more preferably up to 0.5 µW/(cm² • nm).

### EXAMPLES

The present invention is now explained more specifically with reference to preparation examples, examples, and comparative examples; however, it is understood that the scope of the present invention is in no sense limited thereto. Unless otherwise stated, the "part" is given by weight. Various physical properties were measured as follows.
(1) Tg was measured by a differential scanning calorimeter (DSC method).
(2) Unless otherwise stated, the molecular weight was given on a polyisoprene basis as measured by gel permeation chromatography (GPC) using cyclohexane as the solvent.
(3) The initial adhesion of the antireflection layer was measured through the so-called gridiron peel testing and estimated as follows.

A substrate (light guide plate) with an antireflection layer formed thereon by vapor deposition was let stand at normal temperature for 1 hour or longer to prepare a test piece.

The test piece was provided at its one central site with a gridiron pattern of 100 scratches at a spacing of 1 mm, using a cutter knife. Whenever one scratch was provided, the edge of the cutter knife was replaced by a new one and kept at a constant angle of 35 to 45° with respect to the antireflection layer surface. The scratches were provided at an equal speed over about 0.5 second per scratch in such a way as to penetrate through the antireflection layer to the substrate. A cellophane adhesion tape (having an adhesion strength of 2.94 N/10 mm or greater according to JIS Z1522) was applied over the gridiron pattern in such a way as to give a bonded portion of about 50 mm in length, and the tape was then rubbed with a rubber eraser (according to JIS S6050) for full deposition of the tape. One to 2 minutes later, the tape was instantaneously peeled off from its one end at right angles with the antireflection layer surface.

### Evaluation

The initial adhesion was evaluated in terms of the number of squares peeled off out of 100 squares formed by scratches. The lesser the number of squares peeled off, the better the adhesion.
(4) The durability of the antireflection layer was evaluated by keeping a test piece similar to that used for the estimation of initial adhesion in (3) above stationary in the following environments, then providing the test piece with a gridiron pattern of scratches and finally subjecting it to the gridiron peel testing as in (3) above.
(4-1) High-Temperature Testing: 80°C for 500 hours.
(4-2) High-Temperature/Humidity Testing: 60°C and 90% humidity for 500 hours.
(4-3) Low-Temperature Testing: -30°C for 500 hours.

(5) The light ray transmittance was evaluated as follows. Using a spectrophotometer U4000 made by Hitachi Co. Ltd., the light ray transmittance of the light guide plate was measured at an angle of incidence of 0° . At the same time, the reflectivity of the antireflection layer was measured at an angle of incidence of 12° . The measurements were obtained using light rays of 450 to 650 nm wavelengths for estimation on the following criteria.

| Average Reflectivity | Average Transmittance | Evaluation |
|---|---|---|
| less than 1% | 95% or higher | Rank A |
| 1% to less than 2% | 94% to less than 95% | Rank B |
| 2% or higher | less than 94% | Rank C |

(6) The transferability of the fine projection-and-depression shape was evaluated as follows. Using Form Talysurf (made by Taylor Hobson), the transferability of reflecting V grooves formed on the light guide plate was measured. The values of (D/H)x100 where H is the reference height of V grooves in the mold and D is the depth of V grooves on the corresponding positions was evaluated on the following criteria:

| (D/H)x100 | |
|---|---|
| 95% or greater | Rank A |
| 90 to 94% | Rank B |
| 80 to 89% | Rank C |
| 79% or less | Rank D |

### PREPARATION EXAMPLE 1

Five hundred (500) parts of dehydrated cyclohexane were mixed with 0.82 part of 1-hexene, 0.15 part of dibutyl ether and 0.30 part of triisobutylaluminum at room temperature in a nitrogen atmosphere prevailing in a reactor. Then, while a temperature of 45°C was maintained, 30 parts of 8-ethyltetracyclo [4 . 4. 0 .1^{2,5}.1^{7,10}]-dodeca-3-ene (hereinafter ETD for short), 170 parts of tricyclo[4.3.0.1^{2,5}]deca-3, 7-diene (dicyclopentadiene; hereinafter DCP for short) and 40 parts of a 0.7% toluene solution of tungsten hexachloride) were continuously added to the mixture over 2 hours for polymerization. To the polymerization solution 1.06 parts of butyl glycidyl ether and 0.52 part of isopropyl alcohol were added to inactivate the polymerization catalyst, thereby stopping the polymerization reaction.

Then, 270 parts of cyclohexane were added to 100 parts of the obtained ring-opening polymer containing reaction solution together with 5 parts of a nickel-alumina catalyst (Nikki Chemical Co., Ltd.) as a hydrogenation catalyst. The solution was then heated under agitation to a temperature of 200°C at a pressure increased by hydrogen to 50 kg/cm². A four-hour reaction was then carried out to obtain a reaction solution containing 20% of hydrogenated ETD/DCP ring-opening polymer. By calculation on the basis of the composition of norbornenes remaining in the post-polymerization solution (measured by gas chromatography), the ratio of copolymerization of the norbornenes in the polymer was found to be ETD/DCP=15/85 substantially equal to the starting composition. This hydrogenated product of ETD/DCP ring-opening polymer was found to have a weight-average molecular weight (Mw) of 31,000, a hydrogenation rate of 99.9% and a Tg of 100°C.

### PREPARATION EXAMPLE 2

With the exception that instead of 30 parts of 8-ethyltetracyclo[4.4.0.1^{2,5}.1^{7,10}]-dodeca-3-ene (hereinafter ETD for short) and 170 parts of tricyclo[4.3.0.1^{2,5}]deca-3,7-diene (dicyclopentadiene; hereinafter DCP for short), 54 parts of tetracyclo[7.4.1^{10,13}.0^{1,9}.0^{2,7}]-trideca-2,4,6-11-tetraene (1,4-methano-1,4,4a,9a-tetrahydrofluorene (1,4-methano-1,4,4a,9a-tetrahydrofluorene; hereinafter MTF for short), 70 parts of ETD and 76 parts of DCP were used, polymerization and hydrogenation were carried as in Preparation Example 1 to obtain a hydrogenated product of a ring-opening polymer (the copolymerization ratio of MTF/TCD/DCP=27:35:38). This hydrogenated product was found to have a weight-average molecular weight (Mw) of 34,000, a hydrogenation rate of 99.9% and a Tg of 140°C.

### PREPARATION EXAMPLE 3

Three-hundred and twenty (320) parts of dehydrated cyclohexane, 60 parts of a styrene monomer and 0.38 part of dibutyl ether were charged into a stainless steel reactor that was fully dried, replaced therein with nitrogen and equipped with a stirrer. Under agitation at 60°C, 0.36 part of an n-butyllithium solution (a 15% hexane solution) was added to the solution for initiation of polymerization reaction. After the polymerization reaction had been carried out for 1 hour, 20 parts of a monomer mixture consisting of 8 parts of a styrene monomer and 12 parts of an isoprene monomer were added to the reaction solution for a further 1 hour polymerization reaction. Then, 0.2 part of isopropyl alcohol was added to the reaction solution to stop the reaction.

By measurement, the weight-average molecular weight (Mw) and molecular weight distribution (Mw/Mn) of the obtained block copolymer were found to be Mw=102,100 and Mw/Mn=1.11.

Then, 400 parts of the polymerization reaction solution were passed into a pressure-resistant reactor having a stirrer for mixing with 10 parts of a silica-alumina carrier type nickel catalyst (E22U made by Nikki Chemical Co., Ltd. with a nickel content of 60%). The interior of the reactor was replaced by hydrogen gas, and hydrogen was fed to the solution under agitation for an 8-hour hydrogenation reaction at a temperature of 160°C and a pressure of 4.5 MPa.

After the completion of the hydrogenation reaction, the reaction solution was filtered for removal of the hydrogenation catalyst. Then, the reaction solution was diluted with 800 parts of cyclohexane for pouring in 3,500 parts of isopropanol (treated through a filter having a pore diameter of 1 µm in a class 1000 clean room), thereby precipitating a block copolymer, which was then separated and recovered by filtration. The product was dried under reduced pressure at 80°C for 48 hours.

The obtained block copolymer was a block bipolymer comprising a block (hereinafter St for short) containing a repeating unit derived from styrene and a block (hereinafter St/Ip) containing a repeating unit derived from styrene and isoprene, wherein the molar ratio of the respective blocks was St:St/Ip=69:31 (St:Ip=10:21). The block copolymer was found to be Mw=85,100, Mw/Mn=1.17 and Tg=126.5°C, with the rate of hydrogenation of the main chain and aromatic ring being 99.9%.

### EXAMPLE 1

### Preparation of Light Guide Plate By Molding

One hundred (100) parts of the hydrogenated ring-opening polymer obtained in Preparation Example 1, with 0.5 part of an aging preventive (Tominox TT made by Yoshitomi Pharmaceutical Co., Ltd.) and 0.02 part of a soft polymer (Toughtec H1052 made by Asahi Chemical Industry Co., Ltd.) added thereto, was kneaded and extruded through a twinscrew kneading machine (TEM-35B made by Toshiba Machinery Co., Ltd. with a screw diameter of 37 mm, L/D=32, a screw rpm of 250, a resin temperature of 230°C and a feed rate of 10 kg/hour) for pelletization.

After pre-dried by heating at 80°C for 4 hours, the obtained pellet was injection molded through an injection molding machine (Product No. α-100B made by Fanakku Co., Ltd.) into a light guide plate of 1 mm in thickness and 2 inches. The molding conditions were a mold temperature of 70°C and a cylinder temperature of 270°C. On one planar surface of the light guide plate, V grooves of 10 µm in width and 10 µm in depth were formed and arranged along the short side direction and parallel with the long side direction at a spacing of 160 µm.

The light guide plate was provided on the opposite surface having no V grooves with an antireflection layer of a four-layer structure by vacuum vapor deposition, as given below.
1st layer: consisting of a mixture layer of tantalum pentoxide (Ta₂O₅) and zirconium oxide (ZrO₂) (thickness: 0.095λ₀ where λ₀=550 nm) ,
2nd layer: consisting of a silicon oxide (SiO₂) layer (0.07λ₀) ,
3rd layer: consisting of a mixture layer of Ta₂O₅ and ZrO₂ (0.225λ₀) , and
4th layer: consisting of an SiO₂ layer (0.275λ₀)

It is here noted that λ₀ is the wavelength in the intended wavelength range, at which reflectivity should desirously be lowest.

### Order of 1st, 2nd, 3rd and 4th Layers as Viewed from the Light Guide Plate

It is here noted that the respective layers were vapor deposited under the following conditions.
For 2nd and 4th layers: 5x10⁻⁵ torr, 5 Å/sec.
For 1st and 3rd layers: 0.8 to 1x10⁻⁴ torr, 0.5 to 2 Å/sec.

It is also noted that the vacuum deposition temperature was about 40°C for all the layers.

The light transmittance of the thus obtained light guide plate having an antireflection layer, the initial adhesion and durability of the antireflection layer, and the transferability of the fine projection-and-depression were each evaluated. The results are tabulated in Table 1.

**Table 1**

| | AR adhesi on*1) | AR durability*2) | | | light ray transmi ttance | fine projection-and-depression transferabi lity |
|---|---|---|---|---|---|---|
| | initial | high-tempera ture | high-temper ature/ humidi ty | low-tempera ture | | |
| Example 1 | 0/100 | 0/100 | 0/100 | 0/100 | Rank A | Rank A |
| Example 2 | 0/100 | 0/100 | 0/100 | 0/100 | Rank A | Rank B |
| Example 3 | 0/100 | 0/100 | 0/100 | 0/100 | Rank A | Rank B |
| Comp.Ex. 1 | 5/100 | 9/100 | 75/100 | 35/100 | Rank B | Rank C |
| Comp.Ex. 2 | 0/100 | 0/100 | 30/100 | 15/100 | Rank C | Rank D |

| | | | | | | |
|---|---|---|---|---|---|---|
| *1)AR: antireflection layer, | | | | | | |
| *2) adhesion after allowed to stand high-temperature, high-temperature/humidity, low-temperature environments | | | | | | |

### EXAMPLES 2 & 3

With the exception that the polymer obtained in Preparation Example 2, and 3 was used in place of the polymer obtained in Preparation Example 1 and the cylinder temperature for injection molding was changed to 280°C, a pellet was prepared and molded into a light guide plate having an antireflection layer as in Example 1 for evaluation purposes. The results are reported in Table 1.

### COMPARATIVE EXAMPLE 1

With the exception that an acrylic resin (Delpet 80NH made by Asahi Chemical Industry Co., Ltd.) was used in place of a pellet of the polymer obtained in Example 1 and the cylinder temperature for injection molding was changed to 270°C, a light guide plate having an antireflection layer was prepared as in Example 1 for evaluation purposes. The results are reported in Table 1.

### COMPARATIVE EXAMPLE 2

With the exception that a polycarbonate resin (Panlight ML-1100 made by Teijin Ltd.) was used in place of a pellet of the polymer obtained in Example 1 and the cylinder temperature for injection molding was changed to 280°C, a light guide plate having an antireflection layer was prepared as in Example 1 for evaluation purposes. The results are reported in Table 1.

### INDUSTRIAL APPLICABILITY

The present invention can thus provide a light guide plate for a front-light type lighting unit, wherein the initial adhesion and post-durability testing (at high temperature, low temperature, high humidity, etc.) adhesion of an antireflection layer are improved and the transferability of a fine projection-and-depression shape and light ray transmittance are improved as well, and a front-light type lighting unit using the same.

## Claims

1. A light guide plate for a front-light type lighting unit in liquid crystal display systems, which comprises an alicylic structure-containing polymer resin, and has on at least one of major planar surfaces a fine projection-and-depression shape having a reflection function.

2. The light guide plate according to claim 1, wherein the fine projection-and-depression shape is defined by V grooves or prisms having a pitch of 10 to 500 µm and a width of 1 to 250 µm.

3. The light guide plate according to claim 1, which further comprises an antireflection layer on at least one of major planar surfaces.

4. The light guide plate according to claim 3, which comprises an antireflection layer on a surface thereof that faces away from the surface having a fine projection-and-depression shape.

5. The light guide plate according to claim 3, wherein:
the antireflection layer is of a multilayer structure comprising (1) at least one low-refractive-index layer and (2) at least one high-refractive-index layer comprising a metal oxide, a metal sulfide or a metal fluoride, wherein the high-refractive-index layer is located nearer to the light guide plate than the low-refractive-index layer.

6. The light guide plate according to claim 5, wherein the low-refractive-index layer, and the high-refractive-index layer has a thickness of 5 to 500 nm.

7. The light guide plate according to claim 5, wherein the metal oxide is selected from the group consisting of tantalum oxide, zirconium oxide, cerium oxide, niobium oxide, and a mixture thereof.

8. The light guide plate according to claim 5, wherein an underlying layer of silicon oxide is interposed between a surface of the light guide plate and a metal oxide layer nearest to that surface.

9. The light guide plate according to claim 1, wherein the alicyclic structure-containing polymer resin is either one of a hydrogenated product of a ring-opening polymer of a norbornene monomer or a vinyl alicyclic hydrocarbon polymer.

10. A front-light type lighting unit for liquid crystal display systems, in which the light guide plate according to claim 1 and a linear light source are built.

11. A multilayer structure, which comprises a member obtained by molding or otherwise forming an alicyclic structure-containing polymer resin, a layer (A) containing SiOx (1≤x≤2) as a main component and provided thereon, and a layer (B) containing tantalum pentoxide as a main component and provided on the layer (A).

12. The multilayer structure according to claim 11, wherein the layer (B) has a tantalum pentoxide content of 50% by weight or greater.

13. The multilayer structure according to claim 11, wherein one or more inorganic compound layers and/or organic compound layers are formed on the layer (B).

14. The multilayer structure according to claim 11, which provides a light guide plate for a front-light type lighting unit in a liquid crystal display system.

15. An optical multilayer structure, wherein a member which is obtained by molding or otherwise forming an alicyclic structure-containing polymer resin and in which, upon held at 90°C for 1 hour, an amount of gases generated therefrom is limited to 200 µg/m² or less, is provided on a surface thereof with a sputtering film having an average thickness of 50 to 1,000 nm with a thickness fluctuation of +5% or less relative to the average thickness.

16. The multilayer structure according to claim 15, wherein the sputtering film has a light ray transmittance of 50% or greater.

17. The multi layer structure according to claim 15, wherein the sputtering film contains an oxide and/or a nitride as a main component.

18. The multilayer structure according to claim 15, wherein the sputtering film is an antireflection film.

19. The multilayer structure according to claim 15, which provides a front-light type light guide plate for a liquid crystal display device.

20. A vapor deposition process, which comprises holding a composition for vapor deposition containing tantalum oxide as a main component in a molten state for 10 minutes or longer, solidifying the composition, and using the solidified composition to form a layer (A) containing tantalum oxide as a main component on an application member by vacuum vapor deposition.
